# EUROPEAN PATENT SPECIFICATION

(11) **EP 1 476 390 B1**
(45) Date of publication and mention of the grant of the patent: **29.11.2006**
(21) Application number: 03715329.3
(22) Date of filing: 19.02.2003
(51) Int. Cl.: B67B 1/00, B65G 29/02

(54) **DEVICE FOR TRANSFERRING BOTTLE CORKS**
VORRICHTUNG ZUM ÜBERTRAGEN VON FLASCHENKORKEN
DISPOSITIF POUR ACHEMINER DES BOUCHONS DE BOUTEILLES

(30) Priority: 19.02.2002 IT TO20020141
(43) Date of publication of application: 17.11.2004
(73) Proprietor: Mar. Co. Martini Costruzioni Di Martini Marco, 14042 Calamandrana (IT)
(72) Inventor: MARTINI, Marco, I-14053 Canelli (IT)
(74) Representative: Jorio, Paolo
(86) International application number: PCT/IT2003/000094
(87) International publication number: WO 2003/070618

(56) References cited:
- EP-A- 1 036 754
- FR-A- 643 279
- GB-A- 707 969
- US-A- 1 958 248
- US-A- 4 446 962
- US-A- 6 155 403

## Description

### TECHNICAL FIELD

The present invention relates to a device for transferring bottle corks, in particular substantially cylindrical or conical corks made of agglomerated or natural cork, plastic, or a combination of these materials, to which the following description refers purely by way of example.

More specifically, the present invention relates to a device for transferring corks from a loading station to a work station, e.g. a bottle corking station, or a cork stamping, grinding, or gluing station.

### BACKGROUND ART

Devices of the above type are known, for example, from Patent EP-A-1036754, which substantially comprise a vertical cork feed input conduit; a vertical output conduit for feeding the corks to the work station; and a cork transfer unit interposed between the input and output conduits, and defined by two coplanar feed wheels rotating in opposite directions and having C-shaped peripheral grooves defining a circular-section channel through which the corks are fed. More specifically, a coil spring keeps the two feed wheels adjacent to each other on opposite sides of the lateral surface of the cork traveling between them.

In actual use, as the feed wheels rotate simultaneously, tangential thrust is exerted on the lateral surface of each cork, so as to feed the cork from the input conduit to the output conduit.

Contact between the cylindrical lateral surface of each cork and the circular peripheral surface of each feed wheel being "punctiform", i.e. concentrated in a limited area of said surfaces, contact pressure is relatively high, so that, particularly in the case of corks made of cork, which crumbles fairly easily, the tangential thrust exerted by the feed wheels may result in flaking of the peripheral portion of the corks subjected to such thrust, thus resulting in loss of material.

GB-A- 707 969 discloses a device for transferring bottle closures, which is not suitable for transferring corks.

### DISCLOSURE OF INVENTION

It is an object of the present invention to provide a device for transferring bottle corks, designed to eliminate the aforementioned drawback of known devices.

This object is achieved by a device for transferring bottle corks as claimed in claim 1.

### BRIEF DESCRIPTION OF THE DRALOIPTG

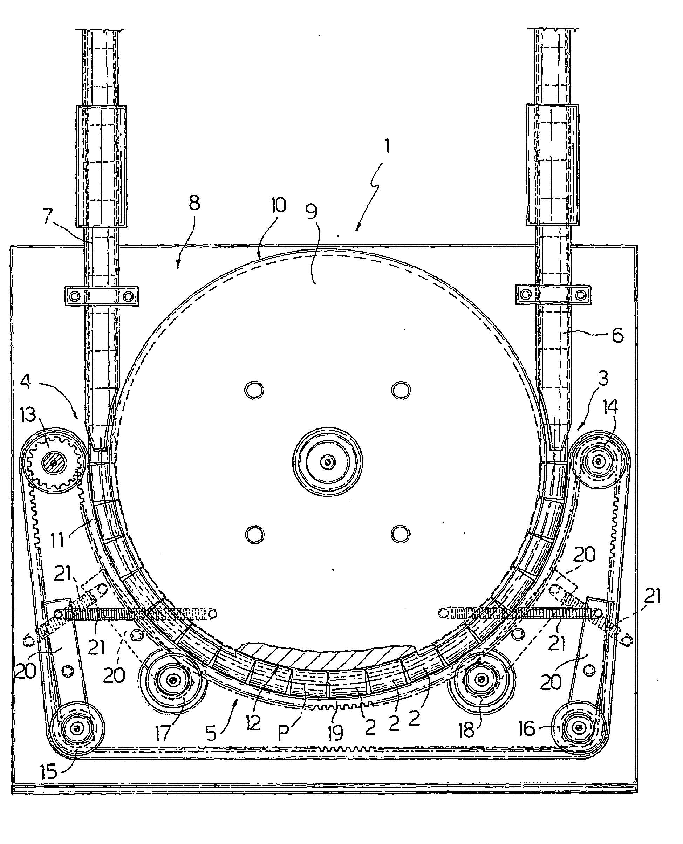

A preferred, non-limiting embodiment of the present invention will be described by way of example with reference to the accompanying drawing showing a front view of the device according to the invention.

### BEST MODE FOR CARRYING OUT THE INVENTION

Number-1 in the accompanying drawing indicates as a whole a device for transferring bottle corks 2 - in the example shown, substantially cylindrical corks made of agglomerated cork.

Device 1 is suitable for feeding an orderly succession of coaxial corks 2 to a corking unit (not shown, by not forming part of the present invention) for corking bottles with respective corks 2, or to other operating units, such as stamping, grinding, or gluing units.

Device 1 substantially comprises an input station 3, an output station 4, and transfer means 5 for feeding corks 2 from input station 3 to output station 4.

More specifically, input and output stations 3, 4 are defined by respective vertical straight conduits 6, 7 fixed, facing each other, to a vertical supporting wall 8 and engaged coaxially by corks 2.

More specifically, conduit 6 feeds corks 2 by gravity to transfer means 5, while conduit 7 guides vertical upward feed of corks 2 by transfer means 5 to said downstream unit.

According to an important characteristic of the present invention, transfer means 5 comprising a disk-shaped guide member 9 tangent to conduits 6, 7 on diametrically opposite sides, and defining, at the bottom, along a peripheral edge 10, a semicircular path P along which to transfer corks 2 from input station 3 to output station 4; and a flexible feed member - in the example shown, a toothed belt 11 - extending partly along path P, facing peripheral edge 10 of guide member 9, and cooperating with the lateral surfaces of corks 2 to feed them along guide member 9.

More specifically, guide member 9 is fixed to wall 8 with its axis perpendicular to wall 8, and comprises, along peripheral edge 10, a circumferential groove 12 having a C-shaped section open towards belt 11, communicating with conduits 6 and 7, and defining a slide channel for corks 2. That is, groove 12 of guide member 9 defines, at the bottom, a link between conduits 6 and 7, and advantageously has a cross section tapering towards the bottom to assist centering corks 2.

Belt 11 is wound into an endless loop about a number of toothed pulleys 13, 14, 15, 16, 17, 18, one of which (13) is powered.

More specifically, pulleys 13, 14, 15, 16, 17, 18 are fixed to and project from wall 8 with their axes parallel to the axis of guide member 9, and are arranged about the bottom half of guide member 9 so that belt 11 has a semicircular contact portion 19 contacting corks 2 and extending along path P, facing and at a constant distance from groove 12. Being flexible, belt 11 adheres to and adapts, at contact portion 19, to the lateral surfaces of corks 2, and pushes them along groove 12 of guide member 9 without creating any severe local pressure, and therefore with no risk of the material of corks 2 flaking off.

As shown in the accompanying drawing, pulleys 13, 14, both having fixed axes, are located respectively at the inlet of conduit 7 and the outlet of conduit 6; pulleys 15, 16 are located beneath and substantially aligned vertically with pulleys 13, 14; and pulleys 17, 18 cooperate with an intermediate portion of contact portion 19 of belt 11.

Each of pulleys 15, 16, 17, 18 is fitted to one end of a relative rocker arm member 20, in turn hinged at an intermediate point to wall 8 and loaded at the opposite end by a coil spring 21; and the elastic reaction of springs 21 presses pulleys 15, 16, 17, 18 against belt 11. More specifically, pulleys 15 and 16 act as tensioners, while pulleys 17 and 18 ensure contact portion 19 of belt 11, subjected to gravity, adheres at all times to the lateral surfaces of corks 2.

The advantages of device 1 according to the present invention will be clear from the foregoing description.

In particular, as shown, using a flexible feed member (11) to feed corks 2 from input station 3 to output station 4 ensures the feed member contacts the whole length of the lateral surfaces of corks 2, so that, for a given tangential thrust on corks 2, the resulting pressure on the lateral surfaces of corks 2 is less than that of known transfer devices described above, thus preventing any flaking of the peripheral portion of corks 2 subjected to tangential thrust.

Clearly, changes may be made to device 1 as described and illustrated herein without, however, departing from the scope of the accompanying Claims.

In particular, other types of flexible feed members, such as flat belts, etc., may be used in place of toothed belt 11.

Device 1 may also be used for transferring conical corks, or corks made of any material, from natural cork to plastic or various compounds.

Finally, conduits 6, 7 need not necessarily be parallel and vertical.

## Claims

1. A device (1) for transferring bottle corks (2), comprising an input station (3), an output station (4), and transfer means (5) for feeding said corks (2) from said input station (3) to said output station (4); **characterized in that** said transfer means (5) comprise fixed guide means (9) defining a path (P) along which to transfer said corks (2) from said input station (3) to said output station (4); and at least one flexible feed member (11) extending along said path (P), facing said guide means (9), and cooperating with the lateral surfaces of said corks (2) to feed them along the guide means (9).

2. A device as claimed in Claim 1, **characterized in that** said feed member (11) comprises a contact portion (19) contacting the lateral surfaces of said corks (2) and the same shape as said path (P).

3. A device as claimed in Claim 1 or 2, **characterized in that** said guide means (9) define, for said corks (2), a slide channel (12) open towards said feed member (11).

4. A device as claimed in any one of the foregoing Claims, **characterized in that** said path (P) is curved.

5. A device as claimed in Claim 4, **characterized in that** said path (P) is in the form of an arc of a circle.

6. A device as claimed in any one of the foregoing Claims, **characterized in that** said feed member (11) is wound into an endless loop about a number of pulleys (13, 14, 15, 16, 17, 18), at least one (13) of which is powered.

7. A device as claimed in any one of Claims 3 to 6, **characterized in that** said guide means comprise a disk-shaped member (9) having, along its peripheral edge (10), a circumferential groove (12) defining said slide channel for said corks (2); said contact portion (19) of said feed member (11) being located facing and a constant distance from said groove (12).

8. A device as claimed in any one of the foregoing Claims, **characterized in that** said feed member is a toothed belt (11).

9. A device as claimed in any one of the foregoing Claims, **characterized in that** said input station and said output station (3, 4) comprise respective conduits (6, 7) for conveying said corks (2) and connected to each other by said guide means (9).

## Patentansprüche

1. Vorrichtung (1) zum Übertragen von Flaschenkorken (2), umfassend eine Eingabestation (3), eine Ausgabestation (4) und Übertragungsmittel (5) zum Zuführen der Korken (2) von der Eingabestation zu der Ausgabestation (4); **dadurch gekennzeichnet, dass** die Übertragungsmittel (5) feste Führungsmittel (9) umfassen, definierend einen Pfad (P), entlang welchem die Korken (2) von der Eingabestation (3) zu der Ausgabestation (4) zu übertragen sind; und zumindest ein flexibles Zuführungsteil (11), sich entlang des Pfades (P) erstreckend, den Führungsmitteln (9) gegenüberliegend, und mit den lateralen Flächen der Korken (2) zusammenarbeitend, um diese entlang der Führungsmittel (9) zuzuführen.

2. Vorrichtung nach Anspruch 1, **dadurch gekennzeichnet, dass** das Zuführungsteil (11) einen Kontaktabschnitt (19) aufweist, die lateralen Flächen der Korken (2) kontaktierend, und von derselben Form, wie der Pfad (P).

3. Vorrichtung nach Anspruch 1 oder 2, **dadurch gekennzeichnet, dass** die Führungsmittel (9) für die Korken (2) einen Gleitkanal (12) definieren, offen in Richtung des Zuführungsteils (11).

4. Vorrichtung nach einem der vorherigen Ansprüche, **dadurch gekennzeichnet, dass** der Pfad (P) gekrümmt ist.

5. Vorrichtung nach Anspruch 4, **dadurch gekennzeichnet dass** der Pfad (P) in der Form eines Bogens oder eines Kreises vorliegt.

6. Vorrichtung nach einem der vorherigen Ansprüche, **dadurch gekennzeichnet, dass** das Zuführungsteil (11) in eine Endlosschleife um eine Anzahl von Rollen (13, 14, 15, 16, 17, 18) gewunden ist, wobei zumindest eine (13) davon angetrieben ist.

7. Vorrichtung nach einem der Ansprüche 3-6, **dadurch gekennzeichnet, dass** die Führungsmittel ein scheibenförmiges Teil (9) umfassen, das entlang seiner peripheren Kante (10) eine umlaufende Rille (12) aufweist, die den Gleitkanal für die Korken (2) definiert; wobei der Kontaktabschnitt (19) des Zuführungsteils (11) gegenüberliegend zu und mit einem konstanten Abstand von der Rille (12) angeordnet ist.

8. Vorrichtung nach einem der vorherigen Ansprüche, **dadurch gekennzeichnet, dass** das Zuführungsteil ein Zahnriemen (11) ist.

9. Vorrichtung nach einem der vorherigen Ansprüche, **dadurch gekennzeichnet, dass** die Eingabestation und die Ausgabestation (3, 4) jeweilige Kanäle (6, 7) umfassen zum Befördern der Korken (2) und verbunden miteinander durch die Führungsmittel (9).

## Revendications

1. Dispositif (1) pour acheminer des bouchons de bouteilles (2), comprenant une station d'entrée (3), une station de sortie (4), et des moyens de transfert (5) pour acheminer lesdits bouchons (2) depuis ladite station d'entrée (3) jusqu'à ladite station de sortie (4) ; **caractérisé en ce que** lesdits moyens de transfert (5) comprennent des moyens de guidage fixes (9) qui définissent un trajet (P) le long duquel on achemine lesdits bouchons (2) depuis ladite station d'entrée (3) jusqu'à ladite station de sortie (4) ; et au moins un élément de transfert flexible (11) s'étendant le long dudit trajet (P), qui se trouve en face desdits moyens de guidage (9) et qui collabore avec les surfaces latérales desdits bouchons (2) de façon à les acheminer le long des moyens de guidage (9).

2. Dispositif selon la revendication 1, **caractérisé en ce que** ledit élément de transfert (11) comprend une portion de contact (19) qui est en contact avec les surfaces latérales desdits bouchons (2) et qui a la même forme que ledit trajet (P).

3. Dispositif selon la revendication 1 ou 2, **caractérisé en ce que** lesdits moyens de guidage (9) définissent, pour lesdits bouchons (2), un canal coulissant (12) ouvert vers ledit élément de transfert (11).

4. Dispositif selon l'une quelconque des revendications précédentes, **caractérisé en ce que** ledit trajet (P) est courbe.

5. Dispositif selon la revendication 4, **caractérisé en ce que** ledit trajet (P) a la forme d'un arc de cercle.

6. Dispositif selon l'une quelconque des revendications précédentes, **caractérisé en ce que** ledit élément de transfert (11) est enroulé en une boucle sans fin autour d'un certain nombre de poulies (13, 14, 15, 16, 17, 18), parmi lesquelles au moins une (13) est motorisée.

7. Dispositif selon l'une quelconque des revendications 3 à 6, **caractérisé en ce que** lesdits moyens de guidage comprennent un élément en forme de disque (9) qui présente, le long de son bord périphérique (10), une gorge circonférentielle (12) qui définit ledit canal coulissant pour lesdits bouchons (2) ; ladite portion de contact (19) dudit élément de transfert (11) étant placée en face de et à une distance constante de ladite gorge (12).

8. Dispositif selon l'une quelconque des revendications précédentes, **caractérisé en ce que** ledit élément de transfert est une courroie dentée (11).

9. Dispositif selon l'une quelconque des revendications précédentes, **caractérisé en ce que** ladite station d'entrée et ladite station de sortie (3, 4) comprennent des conduits respectifs (6, 7) pour acheminer lesdits bouchons (2), et sont reliées l'une à l'autre par lesdits moyens de guidage (9).
